# EUROPÄISCHE PATENTSCHRIFT

(11) **EP 2 447 332 B1**
(45) Veröffentlichungstag und Bekanntmachung des Hinweises auf die Patenterteilung: **22.01.2014**
(21) Anmeldenummer: 10189048.1
(22) Anmeldetag: 27.10.2010
(51) Int. Cl.: C09J 161/00, C09J 161/28, C09J 175/00

(54) **Hybrid-Klebstoff und dessen Verwendung in Holzwerkstoffplatten**
Hybrid adhesive and use of same in wooden boards
Colle hybride et son utilisation dans des plaques en bois

(43) Veröffentlichungstag der Anmeldung: 02.05.2012
(73) Patentinhaber: Kronotec AG, 6006 Luzern (CH)
(72) Erfinder:
(74) Vertreter: Morawski, Birgit

(56) Entgegenhaltungen:
- JP-A- 2009 167 056
- JP-A- 2009 167 056
- JP-A- 2010 188 600
- JP-A- 2010 188 600
- US-B1- 6 465 104
- Habenicht Gerd: "Kleben: Grundlagen, Technologies, Anwendungen", 1 January 2009 (2009-01-01), Srpinger Verlag ISBN: 978-3-540-85264-3 pages 73-136,

## Beschreibung

Die vorliegende Erfindung betrifft einen Klebstoff nach dem Oberbegriff des Anspruchs 1, dessen Verwendung nach Anspruch 10, ein Verfahren zu dessen Herstellung nach den Ansprüchen 11 und 12, eine Holzwerkstoffplatte nach Anspruch 13 und ein Verfahren zur Herstellung der Holzwerkstoffplatte nach Anspruch 14.

Klebstoffe sind ein entscheidender Bestandteil bei der industriellen Fertigung von einer Vielzahl von Produkten, u.a. bei der Herstellung von Holzwerkstoffen. Klebstoffe können nach unterschiedlichen Kriterien basierend auf der chemischen Basis der Klebstoffe oder deren Abbindemechanismus eingeteilt werden. Ausgehend von der Herstellungsweise der Klebstoffe werden insgesamt drei übergeordnete Klassen an Klebstoffen definiert: Polymerisationsklebstoffe, Polyadditionsklebstoffe und Polykondensationsklebstoffe. Weitere Unterteilungen der Klebstoffe in Bezug auf deren physikalische und/oder chemische Eigenschaften wie z.B. Schmelzklebstoffe oder Lösemittelklebstoffe sind ebenfalls möglich.

Die Polymerisationsklebstoffe werden durch Reaktion von eine Kohlenstoff-Kohlenstoff-Doppelbindung aufweisenden Monomeren nach Aktivierung hergestellt. Die Aktivierung der Ausgangsstoffe kann durch geeignete Katalysatoren oder Radikale beziehungsweise in Gegenwart von Strahlung zum Beispiel UV-Strahlung oder Elektronenstrahl bewirkt werden. Typische Polymerisationsklebstoffe sind z.B. der Gruppe der Acrylat-Klebstoffe zuzuordnen.

Ein Polykondensationsklebstoff ist hingegen durch Reaktion von zwei Monomermolekülen unter Abspaltung eines einfachen Moleküls, wie Wasser, Säure oder Alkohol erhältlich. Das polymere Reaktionsprodukt liegt also gemeinsam mit einem während der Reaktion entstehendem Nebenprodukt vor, so dass entsprechende Maßnahmen bei der Verarbeitung dieser Klebstoffe erforderlich sind. Die wichtigsten Polykondensate zur Verwendung als Klebstoffe sind Polyamide, Polyester und Silikone oder Formaldehydkondensate, wobei hier insbesondere die Phenol-Formaldehydharz-Klebstoffe (PF), Kresol-/ Resorcin-Formaldehydharz-Klebstoffe, Harnstoff-Formaldehyd Harz-Klebstoffe (UF) oder MelaminFormaldehydharz-Klebstoffe (MF) genannt seien.

Die Herstellung des Polyadditionsklebstoffes beruht auf der Anlagerung von verschiedenen reaktiven Monomermolekülen unter gleichzeitiger Wanderung eines Wasserstoffatoms von der einen Komponente zu der anderen. Typische Vertreter sind Epoxidharzklebstoffe, Polyurethane oder Polycyanurate.

Zur Herstellung von Holzwerkstoffen wie Holzwerkstoffplatten werden Holzzerkleinerungsprodukte mit dem Klebstoff beleimt und unter Druck- und Temperaturanwendung zu Formkörpern verpresst.

Die Art des verwendeten Klebstoffes wird dabei wesentlich von der Größe und Qualität der verwendeten Holzfasern und/oder Holzspäne beeinflusst.

So werden bei der Produktion von Holzspan- und Holzfaserplatten wie z.B. von MDF-, HDF-Platten, die im Trockenverfahren aus Holzfasern hergestellt werden, häufig Polykondensationsklebstoffe, insbesondere in Form von Harnstoff-Formaldehydharzen verwendet. Der besondere Vorteil in der Verwendung von Formaldehyd-Harzen als Klebstoffe besteht in dessen großer Verfügbarkeit, den geringen Kosten sowie einer einfachen Herstell- und Handhabbarkeit. Da die Formaldehyd-Harze üblicherweise durch Umsetzung mit einem Überschuss an Formaldehyd hergestellt werden, sind diese Überschüsse an Formaldehyd auch in den Zwischen- und/oder Endprodukten nachweisbar. Da Formaldehyd jedoch als krebserregend eingestuft wird, erweist sich die Verwendung von Formaldehyd-Harzen somit insbesondere zur Herstellung von Werkstoffplatten zur Anwendung im Innenbereich als nachteilig. Zudem weisen die auskondensierten Harze eine geringe Wasserstabilität auf.

Bei der Herstellung von Platten aus gerichteten Holzspänen, sogenannten OSB-Platten werden hingegen immer häufiger Polyadditionsklebstoffe enthaltend Urethane, z.B. auf der Basis von Diphenylmethandiisocyanat-Klebstoffen verwendet. Als besonderer Vorteil von Polyurethan-Klebstoffen gelten die vollständige chemische Reaktion ohne störende Überschüsse und die hohe Klebkraft. Als besonders nachteilig gelten hingegen die begrenzte Verfügbarkeit bei hohem Preis und die Affinität zu Metall, so dass metallische Werkzeuge und Anlagenteile besonders vor direktem Kontakt geschützt werden müssen. Nachteilig ist auch, dass z.B. PMDI bereits mit dem Wasser aus der Raumluftfeuchte reagiert.

Die US 6,465,104 B1 beschreibt einen Polyurethanklebstoff herstellbar aus einem niedrig molekularen Polymer, mindestens einem Polyol und mindestens einem Polyisocyanat. Der beschriebene Polyurethanklebstoff kann des Weiteren einen Füllstoff z.B. in Form von Silikaten und einen Adhäsionpromoter z.B. in Form von mit organischen Resten versehenen Silanen wie 3-Glycidyl-oxypropyl-trialkoxysilan oder Melaminharze enthalten. Aus der JP 2010-188600 ist ein transparenter Gasbarrierefilm umfassend ein plastisches Basismaterial, eine auf diesem Material angeordnete primäre Schicht, eine auf der primären Schicht angeordnete anorganische Schicht und einen auf der Schicht angebrachten Gasbarrierefilm bekannt. Die primäre Schicht kann ein Polyester-Polyurethan-Harz oder ein Polycarbonat-Polyurethan-Harz sowie melamingruppenhaltige Harze als Vernetzungsmittel und eine silanhaltige Substanz als weiteres Aditiv enthalten. Die auf der Primärschicht abgeschiedene anorganische Schicht besteht aus Siliziumdioxid, Aluminiumoxid, Zinnoxid, Magnesiumoxid oder Mischungen davon. Somit wird hier ein Klebstoffgemisch mit einer Silanverbindung als primärer Schicht auf einem Kunststoffmaterial verwendet, auf welche eine anorganische Oxidschicht auftragbar ist.

JP 2009-167056 beschreibt wiederum ein Beschichtungsmittel für Glas enthaltend ein Melamin-Bindemittel, Siliziumpartikel mit einem mittleren Durchmesser von 30 nm und ein Polyurethan mit einer Silanol-Gruppe.

Es ist bekannt, dass es bei einem gemeinsamen Einsatz von Polykondensationsklebstoffen und Polyadditionsklebstoffen zu Unverträglichkeiten zwischen beiden Klebstoffsystemen kommt, die zu vergleichsweise schlechten technologischen Eigenschaften führen. Besonders stark zeigt sich dieses Problem an den Grenzflächen von Schichten mit unterschiedlichen Leimsystemen.

Der vorliegenden Erfindung liegt somit die Aufgabe zugrunde, ein Klebstoffsystem zur Verfügung zu stellen, welches diese Nachteile nicht aufweist, da dadurch die positiven Eigenschaften der beiden Leimsysteme kombinierbar wären. Es besteht daher seit langem ein großer Bedarf an hybriden Klebstoffen, um Vorteile zu verknüpfen und Nachteile weitgehend auszuschließen.

Diese Aufgabe wird erfindungsgemäß durch einen Hybrid-Klebstoff mit den Merkmalen des Anspruchs 1 gelöst.

Der erfindungsgemäße Hybrid-Klebstoff, insbesondere zur Verwendung in der Herstellung von Holzwerkstoffen, umfasst demnach
- mindestens einen Polykondensationsklebstoff in Form eines Polyamid-, eines Polyester-, eines Silikon- und/oder eines Formaldehydkondensat-Klebstoffes,
- mindestens einen Polyadditionsklebstoff in Form eines Epoxidharz-, Polycyanurat- und/oder Polyurethanklebstoffes, und
- mindestens eine oxidischen, hydroxydischen oder oxihydroxydischen Nanopartikel kleiner 500 nm, wobei der mindestens eine Partikel mit mindestens einer Verbindung der allgemeinen Formel (I)

   **RₐSiX₍₄₋ₐ₎** **(I),**

   oder der allgemeinen Formel (II)

   **O_{b}X_{c}(OH)_{d}RₑSiO(4-b-c-d-e)/2** **(II)**

   modifiziert ist, wobei
   - X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
   - R ein nicht-hydrolisierbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl; substituiertes und nicht-substituiertes Cycloalkyl, die durch -O- oder -NH- unterbrochen sein können, und
   - wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy,- Isocyanato-, Aldehyd-, Alkylcarbonyl-, Säureanhydrid- und/oder Phosphorsäuregruppe,
- R und X jeweils gleich oder verschieden voneinander sein können, und
- a = 1, 2, 3, insbesondere 1 ist,
- b, c, d = 0 oder 1 sind, und
- e = 1, 2, 3 ist.

Im Sinne der vorliegenden Anmeldung ist es für einen Fachmann ersichtlich, dass sich die silanhaltigen Verbindungen mit der allgemeinen Formel (II) unmittelbar als Hydrolyse-und/oder Kondensationsprodukte aus den Silan-Verbindungen der allgemeinen Formel (I) ableiten. Die Hydrolyse und/oder Kondensation der Verbindungen der allgemeinen Formel (I) wird durch die Reaktionsbedingungen, insbesondere durch saure Reaktionsbedingungen während der Klebstoffherstellung bedingt und beeinflusst.

Als Hybrid-Klebstoff im Sinne der vorliegenden Erfindung ist dabei ein Klebstoff zu verstehen, der mindestens zwei unterschiedliche Klebstoffarten umfasst.

Der erfindungsgemäße Hybrid-Klebstoff weist bei guter Verfügbarkeit eine ausgezeichnete Handhabbarkeit und Klebkraft auf. Zudem trägt der erfindungsgemäße Klebstoff den gestiegenen Anforderungen an energieeffiziente Herstellung und Verwendung, Ökologie und Verträglichkeit Rechnung.

Die Verknüpfung der zwei Systeme aus Polykondensationsklebstoff und Polyadditionsklebstoff erfolgt im erfindungsgemäßen Hybrid-Klebstoff durch eine chemische Kopplung über die modifizierten Partikel. So verfügen die modifizierten Partikel einerseits über mindestens eine funktionellen Gruppe zur chemischen Anbindung von Polykondensationsklebstoffen, wie zum Beispiel von Formaldehyd-Harzen, und andererseits über mindestens eine funktionelle Gruppe zur chemischen Anbindung von Polyadditionsklebstoffen, wie zum Beispiel eines Polyurethans.

Die modifizierten Partikel stellen somit eine Mittlersubstanz zwischen einer Polyadditionsmatrix, z.B. in Form einer Urethan-Matrix, und einem Polykondensat, z.B. in Form eines Harnstoff-Formaldehyd-Harzes, dar.

In einer bevorzugten Ausführungsform werden die Partikel mit mindestes zwei unterschiedlichen Verbindungen der allgemeinen Formel (I) und/oder (II) modifiziert bzw. gemischt.

Der Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

Der nicht- hydrolisierbare R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist im Rahmen der vorliegenden Anmeldung ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest R enthalten ist, umfasst vorteilhafterweise ein Epoxid-, insbesondere ein Glycidyl- oder Glycidyloxy-Gruppe, ein Amin- oder eine Isocyano-Gruppe.

Die funktionellen Gruppen, über die eine Vernetzung möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen den verschiedenen Klebstoffsystemen ausgeführt werden kann. Eine erste funktionelle Gruppe des Silans ist an die Oberfläche der Nanopartikel angebunden. Eine zweite funktionelle Gruppe des Silans, insbesondere in Form einer OH-Gruppe, bindet jeweils an die Matrix des Polyadditions- und/oder Polykondensationsklebstoffes.

In einer besonders bevorzugten Ausführungsform werden als Silane Gamma-Isocyanatopropyltriethoxysilan oder ein Gycidyloxypropyltriethoxysilan verwendet.

Wie beschrieben, verfügt der nicht-hydrolisierbare Rest R zwingend über mindestens eine funktionelle Gruppe Q. Darüber hinaus kann der Rest R auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

Vorliegend ist der mindestens eine Polykondensationsklebstoff ein Polyamid-, ein Polyester-, ein Silikon- und/oder ein Formaldehydkondensat-Klebstoff, insbesondere ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd-Harz-Klebstoff (MF).

Weiterhin ist vorliegend_der mindestens eine Polyadditionsklebstoff ein Epoxidharz-, Polycyanurat- und/oder ein Polyurethan-Klebstoff, insbesondere ein Polyurethan-Klebstoff auf der Basis von Polydiphenylmethandiisocyanat (PMDI).

Die bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Die Partikel sind vorliegend von oxidischer, hydroxidischer oder oxihydroxidischer Natur sein, die über unterschiedliche Verfahren wie zum Beispiel lonenaustauschprozess, Plasma-Prozess, Sol-Gel Verhahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

In einer weiteren Ausführungsform beträgt der Gehalt an Polykondensationsklebstoff und Polyadditionsklebstoff im Hybrid-Klebstoff mindestens 90 Gew%, bevorzugt mindestens 80 Gew%, insbesondere bevorzugt mindestens 70 Gew%. Die Silanverbindungen und Partikel werden jeweils in einer Menge zwischen 1 bis 15 Gew%, bevorzugt 3 bis 13 Gew%, insbesondere bevorzugt zwischen 5 bis 10 Gew% im Hybrid-Klebstoff verwendet. Der Lösemittelgehalt, der im Wesentlichen durch die Verwendung der Silane bedingt ist, liegt ebenfalls zwischen 1 bis 15 Gew%, bevorzugt 3 bis 13 Gew%, insbesondere bevorzugt zwischen 5 bis 10 Gew%. Bei diesen Angaben ist der Lösemittelgehalt aus den eingesetzten Polykondensations- und Polyadditionsklebstoffen jedoch zunächst nicht berücksichtigt.

Der erfindungsgemäße Klebstoff wird bei der Herstellung von Holzwerkstoffen, insbesondere Holzwerkstoffplatten verwendet. Die hergestellten Holzwerkstöffplatten sind bevorzugt Span- und Faserplatten, insbesondere OSB, LDF, HDF oder MDF-Platten, sowie Sperrholz und Brettschichtholz.

Der erfindungsgemäße Klebstoff wird in einem Verfahren umfassend die folgenden Schritte hergestellt:
a) Einbringen von mindestens einem Partikel in eine Dispersion oder Suspension von mindestens einem Polyadditionsklebstoff,
b) Zugabe von mindestens einer ersten Verbindung der allgemeinen Formel (I) und/oder (II) und ggf. eines Polymerisationsstarters,
c) Zugabe von mindestens einer zweiten, von der ersten verschiedenen Verbindung der allgemeinen Formel (I) und/oder (II)
d) ggf. Zugabe von mindestens einem Katalysator, insbesondere einer Säure,
e) Vermischen der in Schritt e) hergestellten Dispersion mit mindestens einem Polykondensationsklebstoff.

Der erfindungsgemäße Klebstoff wird ebenfalls in einem Verfahren mit den folgenden Schritten hergestellt:
a) Mischen von mindestens zwei verschiedenen Verbindungen der allgemeinen Formeln (I) und (II),
b) Zugabe von mindestens einem Partikel zu der in Schritt a) hergestellten Mischung und ggf. Zugabe von mindestens einem Katalysator, insbesondere einer Säure,
c) Zugabe von mindestens einem Polykondensationsklebstoff, und
d) abschließende Zugabe von mindestens einem Polyadditionsklebstoff.

Als geeignete Polymerisationsstarter können z.B. Dibutylisozinndilaurat, Oxazolidin, Bisoxazolidin, Zinkchlorid sowie Stoffklassen der Ketimine oder Aldimine verwendet werden.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren.

Die Partikel werden bevorzugt in einer Menge zwischen 1 bis 15 Gew%, bevorzugt 3 bis 13 Gew%, insbesondere bevorzugt zwischen 5 bis 10 Gew% verwendet.

Die Temperaturen während des gesamten Herstellungsprozesses des Hybrid-Klebstoffes liegen üblicherweise in Bereichen zwischen 20 bis 80°C, bevorzugt zwischen 30 bis 60°C. Es ist ebenfalls möglich, den erfindungsgemäßen Klebstoff in einem Verfahren herzustellen, bei welchem zunächst nur mit Vorstufen aus oben genannten Substanzen gearbeitet wird und die nanoskaligen Partikel in Lösung wachsen gelassen werden. Hierzu wird eine alkoholische Lösung, z.B. iso-Propanol vorgelegt. Anschließend werden *p-*Toluolsulfonsäure und eine Partikelmaterial wie z.B. Zr-n-propoxid zugegeben, wobei nanoskalige Partikel in Lösung entstehen, die anschließend weiter modifiziert werden können.

Die Aufgabe der vorliegenden Erfindung wird ebenfalls durch eine Holzwerkstoffplatte gemäß Anspruch 13 gelöst.

Entsprechend ist in mindestens einer Holzwerkstoffplatte, insbesondere eine Holzspanplatte und/oder Holzfaserplatte, wie z.B. einer OSB-, LDF-, HDF- oder MDF-Platte, mindestens ein erfindungsgemäßer Klebstoff enthalten. Anzumerken ist, das insbesondere die Verwendung der Klebstoffe PMDI und MUPF in der Deckschicht von OSB-Platten die technologischen Werte der Platten wie Querzug und Biegefestigkeit verbessern und gleichzeitig die Quellung verringern.

Die erfindungsgemäße Holzwerkstoffplatte wird in einem Verfahren mit den folgenden Schritten hergestellt:
a) Herstellen von Hackschnitzeln aus geeigneten Hölzern,
b) Zerspanen der Hackschnitzel zu Holzspänen oder Holzfasern,
c) Zwischenlagerung der Holzspäne oder Holzfasern, insbesondere in Silos oder Bunkern,
d) Trocknen der Holzspäne oder Holzfasern,
e) Sortieren bzw. Sichtung der Holzspäne oder Holzfasern entsprechend der Größe der Holzspäne oder Holzfasern,
f) ggf. weitere Zerkleinerung der Holzspäne oder Holzfasern und Zwischenlagerung,
g) Aufbringen der Holzspäne oder Holzfasern auf ein Transportband mittels Wind-und/oder Wurfsichtung, und
h) Verpressen der auf dem Transportband angeordneten Holzspäne oder Holzfasern, wobei der erfindungsgemäße Klebstoff vor, während und/oder nach einem der Schritte b) bis h) zugegeben werden kann. Der Klebstoff kann also zu jedem Zeitpunkt des Herstellungsverfahrens mit den Holzspänen oder Holzfasern vermischt werden. Es ist auch vorstellbar, dass der Klebstoff an mehreren Stellen auf die Holzspäne oder Holzfasern aufgetragen wird.

Zusätzlich zu den oben aufgeführten Verfahrensschritten werden die Hackschnitzel vor ihrer Zerkleinerung von Fremdstoffen z.B. im Rahmen einer Trockenreinigung oder Nassreinigung gereinigt.

In einer bevorzugten Ausführungsform wird der Klebstoff auf die Holzspäne oder Holzfasern aufgesprüht. Die Menge des aufgetragenen Klebstoffes liegt zwischen 2 bis 10 Gew% bezogen auf die eingesetzte Menge an Spänen bzw. Fasern.

Mittels des erfindungsgemäßen Verfahrens ist es möglich Spanplatten oder Faserplatten, wie OSB-, LDF-, MDF- oder LDF Platten mit dem erfindunsgemäßen Hybridklebstoff auszustatten.

Ein typisches Herstellungsverfahren sei in dem folgenden Ausführungsbeispiel anhand der Spanplattenherstellung im Detail beschrieben. Die Verfahren zur Herstellung von Faserplatten unterscheiden sich von diesem Verfahren zur Spanplattenherstellung insbesondere in Hinblick auf die Größe und Beschaffenheit der verwendeten Holzfasern oder Holzspäne sowie in Hinblick auf die verwendeten Drücke und Temperaturen. Der wesentliche Verfahrensablauf und damit die Reihenfolge der Verfahrensschritte sind bei allen Platten jedoch ähnlich und dem Fachmann bekannt.

Die Erfindung wird nachfolgend unter Bezugnahme auf die Figuren der Zeichnungen an mehreren Ausführungsbeispielen näher erläutert. Es zeigen:

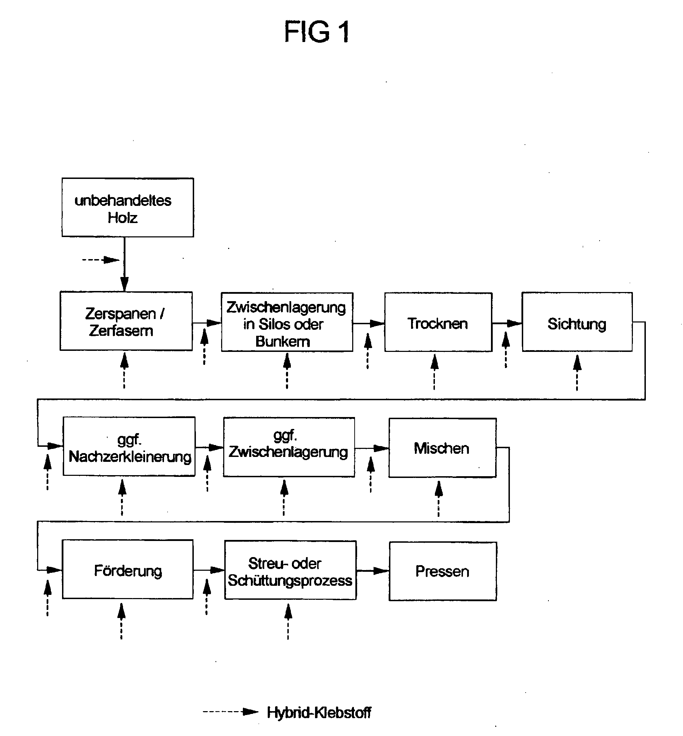

- Figur 1: Schematische Übersicht der Spanplattenherstellung unter Verwendung eines erfindungsgemäßen Klebstoffes

### Beispiel 1: Herstellung eines ersten Hybridklebstoffes

Es wird eine Urethanmatrix vorgelegt, in welcher noch OH- Gruppen bzw. nichtgebundene Cyanato-Gruppen vorliegen. SiO₂-Partikel werden in der gewünschten Menge in die Urethanmatrix eingerührt. Anschließend erfolgt die Zugabe eines Isocyanatopropyltriethoxysilans und eventuell eines Starters Dibutylisozinndilaurat für den Fall, dass nicht bereits ein Starter im Polyurethan enthalten ist. Diese Mischung wird auf 50 °C erwärmt und für ca. 30 Minuten bei dieser Temperatur gehalten. Nach Abkühlen auf Raumtemperatur wird ein Glycidyloxypropyltrieethoxysilan und eine Säure als Katalysator, z.B. Phosphorsäure zugegeben und für weitere 60 Minuten gerührt. Das so hergestellte Polyurethan-Silan-SiO₂-Gemisch wird anschließend mit einer Melaminharzmatrix vermischt.

### Beispiel 2: Herstellung eines zweiten Hybridklebstoffes

Es wird ein Ethanol/Wassergemisch vorgelegt, zu welchem ein Gemisch aus Glycidyloxypropyltrieethoxysilanes und Tetraethoxysilan zugegeben wird. Anschließend erfolgt die Zugabe einer wässrigen Kieselsol Lösung, d.h. nanoskalige SiO₂ Partikel in Wasser, sowie Zugabe einer Säure, z.B. Essigsäure oder p-Toluolsulfonsäure als Katalysator. Nach 5 Minuten Rührzeit wird die Melaminharzmischung und nach weiteren 20 Minuten Rührzeit der Polyurethanklebers zugegeben.

### Beispiel 3: Spanplattenherstellung

Spanform und Spangröße haben entscheidenden Einfluss auf die Qualität von Spanplatten. Die Mittelschicht ist aus größeren Spänen aufgebaut, die der Platte Stabilität geben, die Deckschichten (Außenschichten) sollen aus kleineren Spänen bestehen, um eine glatte und regelmäßige Oberfläche zu erhalten. Je nach Ausgangsmaterial lassen sich Form und Größe der Späne besser oder schlechter beeinflussen. Die moderne Spanplattentechnologie setzt zur Herstellung von Produkten guter Qualität deshalb immer einen bestimmten Anteil feinkörniger Holzspäne für die glatten, ebenmässigen Deckschichten, sowie hauptanteilig zerspantes Frisch- oder Altholz mit Spänen unterschiedlicher Länge für den stabilen, geschichteten Aufbau unterhalb der Deckschicht (frisches Stammholz oder Sägerestholz wie Schwarten, Spreissel, Altholz).

Der Holzplatz ist die Eingangspforte des Rohmaterials. Hier werden die verschiedenen Holzsortimente mit einer Eingangskontrolle erfasst (Qualität, Lagerfähigkeit des Holzes, Mengenermittlung) und an ihren Lagerort zugewiesen. Die Mengenermittlung kann nach Volumen (z.B. Ster) oder nach Gewicht (Nassgewicht, Trockengewicht) erfolgen. Üblich ist heute die Ermittlung des Trockengewichtes (Probenahme des Frischholzes, Wägen, Trocknung unter standardisierten Bedingungen für 24h, Rückwägen), weil hier wirklich die verwendete Holzstoffe bewertet werden (Holz und Einjahrespflanzen enthalten Wasser).

Ein gut organisierter Holzplatz ist die erste Voraussetzung für qualitativ gute Platten, denn der eingesetzte Rohstoff legt die Basiseigenschaften fest: nur gesunde Holzspäne, also kein überaltertes, faules Holz; permanent gute Durchmischung von Nadel-, Laub- sowie Jahrespflanzen, was maßgeblich die Verdichtung und Wichte der Platten beeinflusst; Kombination der eingesetzten Holzsortimente, wie Sägemehl, frisches Stammholz, Sägeresthölzer, Altholz, die wesentlich die physikalischen Eigenschaften beeinflussen. In Ausnahmefällen können auch Einjahrespflanzen wie Flachs, Stroh, Hanf in der Deckschicht und Mittelschicht eingemischt oder vollständig daraus hergestellt werden.

Einem Holzplatz fällt demnach die Aufgabe zu, das gelagerte Holz und Jahrespflanzen in die Produktion einzufahren (Registrierung der Holzbeigen nach Lagerfähigkeit, Warenumsatzplan, Zugänglichkeit jedes Lagerplatzes) sowie die Durchmischung der Holzarten und Sortimente permanent gewährleisten zu können.

Die im Folgenden beschriebenen Schritte der Spanplattenherstellung sind in Figur 1 schematisch dargestellt.

**Zerspanung:** Im ersten Arbeitsschritt können Hackschnitzel hergestellt werden, die nachfolgend zerspant werden oder die Zerspanung erfolgt direkt aus dem Industrieholz, Altholz oder Jahrespflanzen. Je nach gewünschter Spanform können unterschiedliche Zerspaner eingesetzt werden. Typische Zerspanungsmaschinen sind Messerringzerspaner oder Messerwellenzerspaner.

Nach der Zerspanung erfolgt die Zwischenlagerung in Silos oder Bunkern; da der Rohstoff noch immer feucht ist, wird diese Zone Nass-Silo genannt.

**Trocknung**: Die Späne werden durch den Spänetrockner geblasen und mit Prozesswärme (Erdöl, Erdgas, Gebrauchtholz etc.) auf ca. 1-4 % Holzfeuchte getrocknet.

**Sortierung**: Die Sichtung erfolgt unter Verwendung von Sieben unterschiedlicher Lochgrössen. Gegebenenfalls schließt sich eine Nachzerkleinerung an. Bei der Sichtung werden die Fraktionen eingestellt für Mittelschicht (grobe Späne) und Deckschicht (feine Späne). Kleinstfraktionen wie Holzstaub werden als Energieträger thermisch genutzt (z.B. für die Trocknung, anstelle von Erdöl), da diese nicht zur Verbesserung der Plattenqualität beitragen und nur viel Leim binden würden. Grobfraktionen werden nachzerkleinert. Zusätzlich erfolgt häufig eine gravimetrische Sortierung während der Windsichtung.

**Schüttung:** Die Formmatte wird durch mechanische und luftstrombasierende Maschinen erstellt, die ebenfalls nochmals eine Separierung der Späne durchführen können.

**Pressen**: Das Pressen erfolgt in Ein- oder Mehretagenpressen und in Takt- oder kontinuierlichen (endlos) Systemen. Auch Flachpress- oder Strangverfahren sind ebenfalls gängige Methoden.

**Auskühlung/Kalibrierung**: Die Platten werden anschließend an die Verpressung im Sternwender ausgekühlt. Die ausgekühlten, formstabilen Platten werden auf exakte Stärke durch Schleifen der Oberflächen kalibriert.

**Veredelung**: Zur Weiterverarbeitung zu dekorativen Platten erfolgt z.B. durch Aufbringen dekorativer, in Melaminharz getränkter Papiere oder durch Lackierung und deren Folgeprodukten wie Laminatfußboden.

**Konfektionierung**: Die Anlage ermöglicht eine automatische Verschnittoptimierung, sodass die großformatigen Platten mit minimalem Ausschuss auf die gewünschten Kleinformate zugeschnitten werden. Der Ausschuss kann in die Produktion rückgeführt werden.

Der Hybrid-Klebstoff der vorliegenden Erfindung wird an verschiedenen Stellen des Herstellungsverfahrens mit dem Holzmaterial vermischt bzw. auf dieses aufgetragen (siehe Figur 1). So erfolgt die Beleimung bzw. der Auftrag des Hybrid-Klebstoffes nach der Zerspanung, vor der Zwischenlagerung im Silo oder Bunker, nach der Zwischenlagerung im Silo oder Bunker,vor der Trocknung, nach der Trocknung, vor der Sichtung, nach der Sichtung, während der Sichtung, vor der Nachzerkleinerung, nach der Nachzerkleinerung, während der Nachzerkleinerung, nach der Sichtung einzelner Fraktionen, vor dem Zwischenbunker, nach dem Zwischenbunker, vor dem Mischer, im Mischer, nach dem Mischer, in Fallschächten, Blowline/SIS, während der Förderung der Mittel- oder Deckschicht, vor dem Streu- oder Schüttungsprozesses, während des Streu- oder Schüttungsprozesses und/oder nach dem Streu- oder Schüttungsprozess.

## Patentansprüche

1. Hybrid-Klebstoff
umfassend
- mindestens einen Polykondensationsklebstoff in Form eines Polyamid-, eines Polyester-, eines Silikon- und/oder eines Formaldehydkondensat-Klebstoffes,
- mindestens einen Polyadditionsklebstoff in Form eines Epoxidharz-, Polycyanurat- und/oder Polyurethanklebstoffes, und
- mindestens einen oxidischen, hydroxydischen oder oxihydroxydischen Nanopartikel kleiner 500 nm, wobei der mindestens eine Partikel mit mindestens einer Verbindung der allgemeinen Formel (I)
**RₐSiX(₄₋ₐ)** **(I),**
oder der allgemeinen Formel (II)
**O_{b}X_{c}(OH)_{d}RₑSiO(4-b-c-d-e)/2** **(II)**
modifiziert ist, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes AlKyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder -NH- unterbrochen sein können, und
- wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy,- Isocyanato-, Aldehyd-, Alkylcarbonyl-, Säureanhydrid- und/oder Phosphorsäuregruppe,
- R und X jeweils gleich oder verschieden voneinander sein können, und
- a = 1, 2, 3, insbesondere 1 ist,
- b, c, d = 0 oder 1 sind, und
- e = 1, 2, 3 ist.

2. Klebstoff nach Anspruch 1, dadurch gekenntzeichnet, dass X ausgewählt ist aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

3. Klebstoff nach Anspruch 1 oder 2, **dadurch gekennzeichnet, dass** R ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

4. Klebstoff nach einem der vorhergehenden Ansprüche, **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

5. Klebstoff nach einem der vorhergehenden Ansprüche, **dadurch gekennzeichnet, dass** die funktionelle Gruppe Q ein Epoxid-, insbesondere ein Glycidyl- oder Glycidyloxy-Gruppe, ein Amin- oder eine Isocyano-Gruppe ist.

6. Klebstoff nach einem der vorhergehenden Ansprüche, **dadurch gekennzeichnet, dass** der mindestens eine Polykondensationsklebstoff ein Phenol-Formaldehydharz-Klebstoff (PF), ein Kresol-/ Resorcin-Formaldehydharz-Klebstoff, Harnstoff-Formaldehyd Harz-Klebstoff (UF) und/oder Melamin-Formaldehyd Harz Klebstoff (MF) ist.

7. Klebstoff nach einem der vorhergehenden Ansprüche, **dadurch gekennzeichnet, dass** der mindestens eine Polyadditionsklebstoff ein Polyurethan-Klebstoff auf der Basis von Polydiphenylmethandiisocyanat (PMDI) ist.

8. Klebstoff nach einem der vorhergehenden Ansprüche, **dadurch gekennzeichnet, dass** der mindestens eine Partikel eine Größe zwischen 2 und 400 nm, bevorzugt zwischen 2 bis 100 nm aufweist, insbesondere bevorzugt zwischen 2 bis 50 nm aufweist.

9. Klebstoff nach einem der vorhergehenden Ansprüche, **dadurch gekennzeichnet, dass** der mindestens eine Partikel ein Partikel auf der Basis von SiO₂, Al₂O₃, ZrO₂, TiO₂, SnO ist.

10. Verwendung eines Klebstoffes nach einem der vorhergehenden Ansprüche bei der Herstellung von Holzwerkstoffen, insbesondere Holzwerkstoffplatten.

11. Verfahren zur Herstellung eines Klebstoffes nach einem der Ansprüche 1 bis 9 umfassend die Schritte:
a) Einbringen von mindestens einem Partikel in eine Dispersion oder Suspension von mindestens einem Polyadditionklebstoff,
b) Zugabe von mindestens einer ersten Verbindung der allgemeinen Formel (I) und/oder (II) und ggf. eines Polymerisationsstarters,
c) Zugabe von mindestens einer zweiten von der ersten verschiedenen Verbindung der allgemeinen Formel (I) und/oder (II)
d) ggf. Zugabe von mindestens einem Katalysator, insbesondere einer Säure,
e) Vermischen der in Schritt e) hergestellten Dispersion mit mindestens einem Polykondensationsklebstoff

12. Verfahren zur Herstellung eines Klebstoffes nach einem der Ansprüche 1 bis 9 umfassend die Schritte:
a) Mischen von mindestens zwei verschiedenen Verbindungen der allgemeinen Formeln (I) und (II),
b) Zugabe von mindestens einem Partikel zu der in Schritt a) hergestellten Mischung und ggf. Zugabe von mindestens einem Katalysator, insbesondere einer Säure,
c) Zugabe von mindestens einem Polykondensationsklebstoff, und
d) abschlleßende Zugabe von mindestens einem Polyadditionsklebstoff.

13. Holzwerkstoffplatte, insbesondere eine Holzspanplatte und/oder Holzfaserplatte, umfassend mindestens einen Klebstoff nach einem der Ansprüche 1 bis 9.

14. Verfahren zur Verstellung einer Holzwerkstoffplatte nach Anspruch 13 umfassend die folgenden Schritte:
a) Herstellen von Hackschnitzeln aus geeigneten Hölzern,
b) Zerspanen der Hackschnitzel zu Holzspänen oder Holzfasern,
c) Zwischenlagerung der Holzspäne oder Holzfasern, insbesondere in Silos oder Bunkern,
d) Trocknen der Holzspäne oder Holzfasern,
e) Sortieren bzw. Sichtung der Holzspäne oder Holzfasern entsprechend der Größe der Holspäne oder Holzfasern,
f) ggf. weltere Zerkleinerung der Holzspäne oder Holzfasern,
g) Aufbringen der Holzspäne oder Holzfasern auf ein Transportband mittels Wind- und/oder Wurfsichtung,
h) Verpressen der auf dem Transportband angeordneten Holzspäne oder Holzfasern
**dadurch gekennzeichnet, dass**
mindestens ein Klebstoff nach einem der Ansprüche 1 bis 9 vor, während und/oder nach einem der Schritte b) bis h) zugegeben werden kann.

15. Verfahren nach Anspruch 14, **dadurch gekennzeichnet, dass** der Klebstoff auf die Holzspäne oder Holzfasern aufgesprüht wird.

## Claims

1. A hybrid adhesive comprising
- at least one polycondensation adhesive in form of a polyamide, a polyester, a silicone and/or a formaldehyde condensate adhesive ,
- at least one polyaddition adhesive in form of an epoxy resin, polycyanurate and/or a polyurethane adhesive, and
- at least oneoxidic, hydroxidic or oxihydroxidic nanoparticle smaller than 500 nm, wherein the at least one particle is modified with at least one compound of the general Formula (I)
**RₐSiX₍₄₋ₐ₎** **(I),**
or the general Formula (II)
**O_{b}X_{c}(OH)_{d}RₑSiO_{(4-b-c-d-e)/2}** **(II)**
wherein
- X is H, OH or a hydrolyzable radical selected from the group comprising halogen, alkoxy, carboxy, amino, monoalkylamino or dialkylamino, aryloxy, acyloxy, alkylcarbonyl,
- R is a non-hydrolyzable organic radical R selected from the group comprising substituted and non-substituted alkyl, substituted and non-substituted aryl, substituted and non-substituted alkenyl, substituted and non-substituted alkinyl, substituted and non-substituted cycloalkyl, which can be interrupted by -O- or -NH-, and
- wherein R includes at least one functional group Q which is selected from a group including an epoxy, hydroxy, ether, amino, monoalkylamino, dialkylamino, substituted and non-substituted anilino, amide, carboxy, alkinyl, acrylic, acryloxy, methacrylic, methacryloxy, mercapto, cyano, alkoxy, isocyanato, aldehyde, alkylcarbonyl, acid anhydride and/or phosphoric acid group,
- R and X each can be the same or different from each other, and
- a = 1, 2, 3, in particular 1,
- b, c, d = 0 or 1, and
- e = 1, 2, 3.

2. The adhesive according to claim 1, **characterized in that** X is selected from a group including fluorine, chlorine, bromine, iodine, C₁₋₆ alkoxy, in particular methoxy, ethoxy, n-propoxy and butoxy, C₆₋₁₀ aryloxy, in particular phenoxy, C₂₋₇ acyloxy, in particular acetoxy or propionoxy, C₂₋₇ alkylcarbonyl, in particular acetyl, monoalkylamino or dialkylamino with C₁ to C₁₂, in particular C₁ to C₆.

3. The adhesive according to claim 1 or 2, **characterized in that** R is selected from a group comprising substituted and non-substituted C₁-C₃₀ alkyl, in particular C₅-C₂₅ alkyl, substituted and non-substituted C₂-C₆ alkenyl, substituted and non-substituted C₂-C₆ alkinyl, and substituted and non-substituted C₆-C₁₀ aryl.

4. The adhesive according to any of the preceding claims, **characterized in that** R is selected from the group including methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, phenyl and naphthyl.

5. The adhesive according to any of the preceding claims, **characterized in that** the functional group Q is an epoxide, in particular a glycidyl or glycidyloxy group, an amine or an isocyano group.

6. The adhesive according to any of the preceding claims, **characterized in that** the at least one polycondensation adhesive is a phenol-formaldehyde-resin adhesive (PF), a cresol/resorcinol-formaldehyde-resin adhesive, urea-formaldehyde-resin adhesive (UF) and/or melamine-formaldehyde-resin adhesive (MF).

7. The adhesive according to any of the preceding claims, **characterized in that** the at least one polyaddition adhesive is a polyurethane adhesive on the basis of polydiphenylmethane diisocyanate (PMDI).

8. The adhesive according to any of the preceding claims, **characterized in that** the at least one particle has a size between 2 and 400 nm, preferably between 2 and 100 nm, particularly preferably between 2 and 50 nm.

9. The adhesive according to any of the preceding claims, **characterized in that** the at least one particle is a particle on the basis of SiO₂, Al₂O₃, ZrO₂, TiO₂, SnO.

10. Use of an adhesive according to any of the preceding claims in the production of wood-based materials, in particular engineered wood boards.

11. A method for the production of an adhesive according to any of claims 1 to 9, comprising the following steps:
a) incorporating at least one particle into a dispersion or suspension of at least one polyaddition adhesive,
b) addition of at least one first compound of the general Formula (I) and/or (II) and possibly a polymerization starter,
c) addition of at least one second compound different from the first compound of the general Formula (I) and/or (II),
d) possibly addition of at least one catalyst, in particular an acid, and
e) mixing the dispersion prepared in step e) with at least one polycondensation adhesive.

12. A method for the production of an adhesive according to any of claims 1 to 9, comprising the following steps:
a) mixing at least two different compounds of the general Formulae (I) and (II),
b) addition of at least one particle to the mixture prepared in step a) and possibly addition at least one catalyst, in particular an acid,
c) addition of at least one polycondensation adhesive, and
d) final addition of at least one polyaddition adhesive.

13. An engineered wood board, in particular a wood particle board and/or wood fiber board, comprising at least one adhesive according to any of claims 1 to 9.

14. A method for the production of an engineered wood board according to claim 13, comprising the following steps:
a) producing wood chips from suitable timber,
b) chipping the wood chips to wood particles or wood fibers,
c) temporary storage of the wood particles or wood fibers, in particular in silos or bunkers,
d) drying the wood particles or wood fibers,
e) sorting or classifying the wood particles or wood fibers corresponding to the size of the wood particles or wood fibers,
f) possibly further comminution of the wood particles or wood fibers,
g) applying the wood particles or wood fibers onto a transport belt by means of pneumatic and/or spreader classification,
h) compressing the wood particles or wood fibers arranged on the transport belt,
**characterized in that**
at least one adhesive according to any of claims 1 to 9 can be added before, during and/or after any of the steps b) to h).

15. The method according to claim 14, **characterized in that** the adhesive is sprayed onto the wood particles or wood fibers.

## Revendications

1. Colle hybride,
comprenant
- au moins une colle de polycondensation sous la forme d'une colle d'un condensat de polyamide, de polyester, de silicone et/ou de formaldéhyde,
- au moins une colle de polyaddition sous la forme d'une colle de résine époxyde, de polycyanurate et/ou de polyuréthane, et
- au moins une nanoparticule oxydique, hydroxydique ou oxyhydroxydique d'une taille inférieure à 500 nm, l'au moins une particule étant modifiée avec au moins un composé de formule générale (I)
**RₐSiX₍₄₋ₐ₎** **(I)**
ou de formule générale (II)
**O_{b}X_{c}(OH)_{d}RₑSiO(4-b-C-d-e)/2** **(II)**
dans lesquelles
- X représente H, OH ou un radical hydrolysable choisi dans le groupe comprenant halogène, alcoxy, carboxy, amino, monoalkylamino ou dialkylamino, aryloxy, acyloxy, alkylcarbonyle,
- R représente un radical organique non hydrolysable R étant choisi dans le groupe comprenant alkyle substitué et non substitué, aryle substitué et non substitué, alcényle substitué et non substitué, alcynyle substitué et non substitué, cycloalkyle substitué et non substitué, qui peuvent être interrompus par -O- ou -NH-,
- R comprenant au moins un groupe fonctionnel Q, qui est choisi dans un groupe contenant un groupe époxyde, hydroxy, éther, amino, monoalkylamino, dialkylamino, anilino substitué et non substitué, amide, carboxy, alcynyle, acryle, acryloxy, méthacryle, méthacryloxy, mercapto, cyano, alcoxy, isocyanato, aldéhyde, alkylcarbonyle, anhydride d'acide et/ou acide phosphorique,
- R et X pouvant à chaque fois être identiques ou différents l'un de l'autre, et
- a = 1, 2, 3, en particulier 1,
- b, c, d = 0 ou 1, et
- e = 1, 2, 3.

2. Colle selon la revendication 1, **caractérisée en ce que** X est choisi dans un groupe contenant fluor, chlore, brome, iode, alcoxy en C₁₋₆, en particulier méthoxy, éthoxy, n-propoxy et butoxy, aryloxy en C₆₋₁₀, en particulier phénoxy, acyloxy en C₂₋₇, en particulier acétoxy ou propionoxy, alkylcarbonyle en C₂₋₇, en particulier acétyle, monoalkylamino ou dialkylamino en C₁ à C₁₂, en particulier en C₁ à C₆.

3. Colle selon la revendication 1 ou 2, **caractérisée en ce que** R est choisi dans un groupe comprenant alkyle en C₁-C₃₀ substitué et non substitué, en particulier alkyle en C₅-C₂₅, alcényle en C₂-C₆ substitué et non substitué, alcynyle en C₂-C₆ substitué et non substitué et aryle en C₆-C₁₀ substitué et non substitué.

4. Colle selon l'une quelconque des revendications précédentes, **caractérisée en ce que** R est choisi dans le groupe contenant méthyle, éthyle, n-propyle, isopropyle, n-butyle, s-butyle, t-butyle, pentyle, hexyle, cyclohexyle, vinyle, 1-propényle, 2-propényle, butényle, acétylényle, propargyle, phényle et naphtyle.

5. Colle selon l'une quelconque des revendications précédentes, **caractérisée en ce que** le groupe fonctionnel Q est un groupe époxyde, en particulier un groupe glycidyle ou glycidyloxy, un groupe amine ou un groupe isocyano.

6. Colle selon l'une quelconque des revendications précédentes, **caractérisée en ce que** l'au moins une colle de polycondensation est une colle de résine de phénol-formaldéhyde (PF), une colle de résine de crésol-/résorcine-formaldéhyde, une colle de résine d'urée-formaldéhyde (UF) et/ou une colle de résine de mélamine-formaldéhyde (MF).

7. Colle selon l'une quelconque des revendications précédentes, **caractérisée en ce que** l'au moins une colle de polyaddition est une colle de polyuréthane à base de diisocyanate de polydiphénylméthane (PMDI).

8. Colle selon l'une quelconque des revendications précédentes, **caractérisée en ce que** l'au moins une particule présente une taille comprise entre 2 et 400 nm, de préférence entre 2 et 100 nm, de manière particulièrement préférée entre 2 et 50 nm.

9. Colle selon l'une quelconque des revendications précédentes, **caractérisée en ce que** l'au moins une particule est une particule à base de SiO₂, Al₂O₃, ZrO₂, TiO₂, SnO.

10. Utilisation d'une colle selon l'une quelconque des revendications précédentes pour la fabrication de matériaux à base de bois, en particulier de panneaux en matériau à base de bois.

11. Procédé de fabrication d'une colle selon l'une quelconque des revendications 1 à 9, comprenant les étapes suivantes :
a) ajouter au moins une particule dans une dispersion ou suspension d'au moins une colle de polyaddition,
b) ajouter au moins un premier composé de formule générale (I) et/ou (II) et éventuellement un démarreur de polymérisation,
c) ajouter au moins un second composé de formule générale (I) et/ou (II) différent du premier composé,
d) éventuellement ajouter au moins un catalyseur, en particulier un acide,
e) mélanger la dispersion préparée à l'étape e) avec au moins une colle de polycondensation.

12. Procédé de fabrication d'une colle selon l'une quelconque des revendications 1 à 9, comprenant les étapes suivantes :
a) mélanger au moins deux composés différents de formules générales (I) et (II) différents,
b) ajouter au moins une particule au mélange préparé à l'étape a) et éventuellement ajouter au moins un catalyseur, en particulier un acide,
c) ajouter au moins une colle de polycondensation et enfin
d) ajouter au moins une colle de polyaddition.

13. Panneau en matériau à base de bois, en particulier panneau de particules de bois et/ou panneau de fibres de bois, comprenant au moins une colle selon l'une quelconque des revendications 1 à 9.

14. Procédé de fabrication d'un panneau en matériau à base de bois selon la revendication 13, comprenant les étapes suivantes :
a) fabriquer des copeaux de bois à partir de bois appropriés,
b) transformer les copeaux de bois en particules de bois ou en fibres de bois,
c) entreposer les particules de bois ou des fibres de bois, en particulier dans des silos ou des réservoirs,
d) sécher les particules de bois ou des fibres de bois,
e) trier ou examiner les particules de bois ou des fibres de bois en fonction de la taille des particules de bois ou des fibres de bois,
f) éventuellement broyer en plus les particules de bois ou les fibres de bois,
g) appliquer les particules de bois ou les fibres de bois sur une bande de transport par séparation à air et/ou par projection,
h) comprimer les particules de bois ou les fibres de bois agencées sur la bande de transport,
**caractérisé en ce qu'**au moins une colle selon l'une quelconque des revendications 1 à 9 peut être ajoutée avant, pendant et/ou après une des étapes b) à h).

15. Procédé selon la revendication 14, **caractérisé en ce que** la colle est pulvérisée sur les particules de bois ou les fibres de bois.
